# EUROPÄISCHE PATENTSCHRIFT

(11) **EP 2 431 640 B1**
(45) Veröffentlichungstag und Bekanntmachung des Hinweises auf die Patenterteilung: **12.09.2018**
(21) Anmeldenummer: 11006211.4
(22) Anmeldetag: 28.07.2011
(51) Int. Cl.: F16K 31/06, F15B 13/043, F15B 21/08, F01M 1/14, F01M 1/08, F01M 11/02

(54) **Verfahren zum Ansteuern einer ballistischen Bewegung eines Sperrkörper eines Ventils**
Method for controlling a ballistic movement of a retaining element of a valve
Procédé de commande d'un mouvement balistique d'un corps de verrouillage d'une soupape

(30) Priorität: 15.09.2010 DE 102010045504
(43) Veröffentlichungstag der Anmeldung: 21.03.2012
(73) Patentinhaber: Robert Bosch GmbH, 70469 Stuttgart (DE)
(72) Erfinder: Schmidt, Stefan, 97816 Lohr am Main (DE); Dörr, Heribert, 97854 Hausen (DE)
(74) Vertreter: Thürer, Andreas

(56) Entgegenhaltungen:
- EP-A1- 1 394 008
- EP-A1- 2 141 396
- WO-A1-2010/141241
- GB-A- 2 338 051
- US-A1- 2004 206 319
- US-A1- 2006 231 051

## Beschreibung

Die vorliegende Erfindung bezieht sich auf ein Verfahren zum Ansteuern einer ballistischen Bewegung eines Sperrkörpers eines Ventils, ein Steuergerät zum Ansteuern einer ballistischen Bewegung eines Sperrkörpers eines Ventils, sowie eine Schmiervorrichtung.

Eine herkömmliche Ansteuerung eines Ventils gibt eine zu erreichende Endposition für einen Sperrkörper des angesteuerten Ventils vor. Bei einem Proportionalventil, wird mit hohem Aufwand einen Volumenstrom durch das Ventil reguliert. Sind für die jeweilige Anwendung geringe Durchflussmengen gefordert, so ist es notwendig entweder ein Proportional bzw. Servoventil oder ein hochdynamisches Wegeventil mit 100% Öffnung für eine definierte Zeit einzusetzen. Beide Lösungen sind teuer und verursachen einen hohen Aufwand in der Ansteuerung. Zusätzlich ist das Proportionalventil empfindlich gegenüber Verschmutzungen.

Die EP 2 141 396 A1 offenbart eine Vorrichtung zur Steuerung eine s Heiz- oder Kühlkörpers und einen Heizkörper.

Die EP 1 394 008 A1 offenbart ein elektromagnetisches Ventilsteuergerät und ein entsprechendes Verfahren.

Die GB 2 338 051 A offenbart einen Teilstoß-Controller.

Die WO 2010/141241 A1 offenbart ein Spulenquetschgerät und ein Verfahren zur Applikation von medizinischen Fluiden, welches geringe Störungen verursacht. Diese Druckschrift ist nach dem beanspruchten Prioritätsdatum der vorliegenden Anmeldung veröffentlicht, und die zugehörige Anmeldung ist nicht wirksam in die regionale Phase vor dem EPA eingetreten.

Die Druckschrift US 2006/0231051 A1 offenbart einen Ansatz zur Anpassung einer Zeitsteuerung eines ballistischen Ventils.

Die Druckschrift US 2004/0206319 A1 offenbart einen elektromagnetischen Ventilaktuator für Brennkraftmaschinen und eine Brennkraftmaschine, die mit einem solchen Aktuator ausgestattet ist.

Es ist die Aufgabe der vorliegenden Erfindung, mit einem Wegeventil eine geringere Durchflussmenge, als eine Auslegungs-Durchflussmenge des Wegeventils zu ermöglichen.

Diese Aufgabe wird durch ein Verfahren zum Ansteuern einer ballistischen Bewegung eines Sperrkörpers eines Ventils, ein Steuergerät zum Ansteuern einer ballistischen Bewegung eines Sperrkörpers eines Ventils, ein Computerprogrammprodukt sowie eine Schmiervorrichtung gemäß den unabhängigen Ansprüchen gelöst.

Der vorliegenden Erfindung liegt die Erkenntnis zu Grunde, dass während eines Öffnungsvorgangs eines konventionellen Ventils eine Öffnungsweite eines Durchflusskanals durch das Ventil bis zu einem Erreichen der vollen Öffnungsweite stetig ansteigt. Während des Öffnungsvorgangs steigt damit eine Durchflussmenge durch das Ventil bis zum Erreichen der vollen Öffnungsweite stetig an. Um eine geringere Durchflussmenge, als eine Auslegungs-Durchflussmenge (d.h. eine Durchflussmenge bei voller Öffnung) durch das Ventil zu bewirken, kann daher der Öffnungsvorgang vor dem Erreichen der vollen Öffnungsweite unterbrochen werden. Weiterhin lässt sich eine Verringerung der Durchflussmenge überwachen, wenn durch eine Abfrage von Kennwerten des Ventils während einem Öffnungsvorgang Einfluss auf nachfolgende Öffnungsvorgänge genommen wird. Weiterhin kann das konventionelle Ventil noch immer vollständig geöffnet werden, wodurch die Auslegungs-Durchflussmenge durch das Ventil strömen kann und Ablagerungen und Verschmutzungen aus dem Ventil und angeschlossenen Leitungen ausgespült werden können. Unter einer Auslegungs-Durchflussmenge ist dabei eine Nenn-Durchflussmenge eines Fluids zu verstehen, für die das Ventil entwickelt wurde.

Vorteilhafterweise ermöglicht eine Unterbrechung eines Öffnungsvorgangs eines Ventils eine Verringerung eines mittleren Volumenstroms durch das Ventil gegenüber einem Nennvolumenstrom des Ventils mit einer guten Dosierbarkeit und Reproduzierbarkeit. Zusätzlich lassen sich Verschmutzungen durch vollständiges Öffnen des Ventils ausspülen und so eine Wartungsfreiheit realisieren. Ein Einsatz von einfacheren und adynamischeren Ventilen bedingt niedrigere Kosten Durch eine Spülungsmöglichkeit bei Vollöffnung ist das Ventil weniger schmutzanfällig.

Die vorliegende Erfindung schafft ein Verfahren zum Ansteuern einer ballistischen Bewegung eines Sperrkörpers eines Ventils, wobei der Sperrkörper zur Sperrung eines Durchflussquerschnitts des Ventils ausgebildet ist, wobei der Sperrkörper in eine erste Schaltstellung und eine zweite Schaltstellung schaltbar ist, wobei der Sperrkörper in einer Ruhelage die erste Schaltstellung einnimmt, und wobei der Sperrkörper ansprechend auf ein Aktivierungssignal aus seiner Ruhelage bewegt wird, wobei das Verfahren einen Schritt des Ansteuerns der Bewegung des Sperrkörpers aufweist, wobei eine Signaldauer des Aktivierungssignals zeitlich derart dimensioniert ist, dass der Sperrkörper vor Erreichen der zweiten Schaltstellung von einer Gegenkraft zurück in die erste Schaltstellung bewegt wird und dass der Sperrkörper während der Bewegung den Durchflussquerschnitt des Ventils zumindest teilweise freigibt.

Weiterhin schafft die Erfindung ein Steuergerät zum Ansteuern einer ballistischen Bewegung eines Sperrkörpers eines Ventils, wobei der Sperrkörper zur Sperrung eines Durchflussquerschnitts des Ventils ausgebildet ist, wobei der Sperrkörper in eine erste Schaltstellung und eine zweite Schaltstellung schaltbar ist, wobei der Sperrkörper in einer Ruhelage die erste Schaltstellung einnimmt, und wobei der Sperrkörper ansprechend auf ein Aktivierungssignal aus seiner Ruhelage bewegt wird, wobei das Steuergerät eine Einrichtung zum Ansteuern der Bewegung des Sperrkörpers aufweist, wobei eine Signaldauer des Aktivierungssignals zeitlich derart dimensioniert ist, dass der Sperrkörper vor Erreichen der zweiten Schaltstellung von einer Gegenkraft zurück in die erste Schaltstellung bewegt wird und dass der Sperrkörper während der Bewegung den Durchflussquerschnitt des Ventils zumindest teilweise freigibt.

Ferner schafft die Erfindung eine Schmiervorrichtung, die folgende Merkmale aufweist: ein Schmierventil mit einem Sperrkörper zur Sperrung eines Durchflussquerschnitts des Schmierventils, wobei der Sperrkörper in eine erste Schaltstellung und eine zweite Schaltstellung schaltbar ist, wobei der Sperrkörper in einer Ruhelage die erste Schaltstellung einnimmt, und wobei der Sperrkörper ansprechend auf ein Aktivierungssignal aus seiner Ruhelage bewegt wird; und ein Steuergerät gemäß dem hier vorgestellten Ansatz.

Unter einem Ventil kann eine Armatur zur Ermöglichung oder Unterbrechung eines Fluidstroms in einer Leitung verstanden werden. Beispielsweise kann das Ventil ein Wegeventil oder ein 2/2 Wegeventil oder ein 2/2 Wege-Sitzventil sein. Ein Ventil kann einen Ventilgrundkörper aufweisen, der Anschlussmöglichkeiten für mindestens eine Leitung aufweisen kann. Ein Ventil kann auch für eine Einschraubbohrung vorgesehen sein, wobei in der Einschraubbohrung die Anschlussmöglichkeit ausgebildet sein kann oder die Einschraubbohrung ein Teil der Leitung sein kann. Weiterhin kann ein Ventil einen Sperrkörper aufweisen, der innerhalb des Ventilgrundkörpers beweglich angeordnet sein kann. Der Sperrkörper kann ausgebildet sein den Fluidstrom zu unterbrechen oder umzuleiten. Der Sperrkörper kann ausgebildet sein einen Durchflussquerschnitt des Ventils für den Fluidstrom freizugeben oder zu unterbrechen. Dazu kann der Sperrkörper gegen einen Dichtungssitz, der den Durchflussquerschnitt umgeben kann, gedrückt werden oder von dem Dichtungssitz wegbewegt werden. Eine erste Schaltstellung kann von dem Sperrkörper dann eingenommen werden, wenn der Sperrkörper mit dem Dichtungssitz in Kontakt ist, d.h. wenn der Sperrkörper eine Fluiddurchleitung durch den Ventilgrundkörper verhindert; eine zweite Schaltstellung des Sperrkörpers kann darin gesehen werden, wenn der Sperrkörper den Durchflussquerschnitt vollständig freigibt. Der Sperrkörper kann eine Ruhelage einnehmen, wenn keine Kraft von außerhalb des Ventils auf den Sperrkörper wirkt. Wenn eine äußere Kraft, beispielsweise ansprechend auf ein Aktivierungssignal, auf den Sperrkörper wirkt, kann der Sperrkörper aus seiner Ruhelage bewegt werden. Das Aktivierungssignal kann ein elektrisches Signal sein. Das Aktivierungssignal kann eine notwendige Energie für eine Bewegung des Sperrkörpers direkt bereitstellen. Das Aktivierungssignal kann auch einen Schalter oder Leistungssteller, wie z.B. ein Relais oder eine Endstufe, aktivieren, so dass der Schalter oder die Endstufe die notwendige Energie bereitstellt. Das Aktivierungssignal kann einen Aktuator ansteuern, so dass er eine mechanische Kraft auf den Sperrkörper des Ventils ausübt. Das elektrische Signal kann durch Vermittlung des Aktuators beispielsweise eine magnetische Kraft bewirken. Ebenso kann das elektrische Signal eine piezoelektrische Kraft oder eine elektrostatische Kraft bewirken, die auf den Sperrkörper übertragen werden kann. Das Aktivierungssignal kann eine Signaldauer aufweisen. Die Signaldauer kann zeitlich begrenzt sein. Beispielsweise kann die Signaldauer in einem Bereich zwischen einer und 100 Millisekunden liegen. Eine Gegenkraft kann eine innere Kraft, beispielsweise die Erdanziehungskraft oder eine Federkraft oder eine magnetische Kraft sein, die auf den Sperrkörper wirkt und ihn in seine Ruhelage drückt oder ihn in seiner Ruhelage hält. Die Gegenkraft kann aber auch eine externe Kraft sein, beispielsweise verursacht durch einen Fluiddruck oder Strömungskräfte in einem in dem Ventil strömenden Fluid.

Gemäß einer weiteren Ausführungsform der vorliegenden Erfindung umfasst das Verfahren weiterhin einen Schritt des Erfassens einer Differenz zwischen einer Länge eines Bewegungswegs des Sperrkörpers und einer Soll-Länge des Bewegungswegs, wobei in einem nachfolgenden Schritt des Ansteuerns die Signaldauer entsprechend der Differenz verändert oder variiert wird. Unter einer Soll-Länge kann eine Strecke verstanden werden, deren Länge maximal der Länge des Bewegungsweges des Sperrkörpers zwischen der ersten und der zweiten Schaltstellung entspricht. Eine Länge des Bewegungswegs kann eine vom Sperrkörper zurückgelegte Distanz zwischen der Ruhelage und einer vom Sperrkörper tatsächlich erreichten Position sein. Das Erfassen kann mechanisch, optisch oder elektrisch durchgeführt werden. Eine elektrische Erfassung kann auf kapazitivem, resistivem oder induktivem Wege erfolgen. Ein Zahlenwert der Differenz kann für eine Beeinflussung der Signaldauer in einem nachfolgenden Schritt des Ansteuerns verwendet werden, wenn der Schritt des Verfahrens wiederholt ausgeführt wird. Ebenso kann eine Drucküberwachung des Fluids in einer Zuleitung zu dem Ventil ausgewertet werden. Dadurch kann im Betrieb ein vorausgehender Hub bzw. eine Länge eines Bewegungsweges des Sperrkörpers einen nachfolgenden Hub bzw. eine Länge eines Bewegungsweges des Sperrkörpers beeinflussen und eine tatsächlich durch den Durchflussquerschnitt fließende Fluidmenge an eine vorgegebene, gewünschte Fluidmenge angepasst werden.

Ferner kann auch die Länge des Bewegungswegs erfasst werden, indem eine elektrische Größe als Reaktion des Ventils auf das Aktivierungssignal während des Schritts des Ansteuerns ausgewertet wird.

Eine elektrische Größe kann ein Stromwert oder ein Spannungswert sein. Eine Reaktion des Ventils kann in einer Veränderung eines Wertes mindestens einer elektrischen Größe durch eine Variation der Position oder Ausrichtung des Sperrkörpers resultieren. Beispielsweise kann die Reaktion eine Gegeninduktion des Ventilantriebs gegen eine Magnetkraft sein, die durch das Aktivierungssignal bewirkt wird. Die elektrische Größe kann an den elektrischen Leitungen zu dem Ventilantrieb erfasst werden. Dadurch kann ohne eine zusätzliche Überwachungseinrichtung ein Hub des Ventils überwacht werden.

In einer zusätzlichen Ausführungsform der vorliegenden Erfindung umfasst das Verfahren weiterhin einen Schritt des Betätigens des Wegeventils, wobei der Sperrkörper ansprechend auf ein Reinigungssignal aus seiner Ruhelage bewegt wird, wobei eine Signaldauer des Reinigungssignals zeitlich derart dimensioniert ist, dass der Sperrkörper die zweite Schaltstellung erreicht und der Sperrkörper den Durchflussquerschnitt vollständig freigibt.

Ein Reinigungssignal kann wie das Aktivierungssignal ebenfalls ein elektrisches Signal sein. Das Reinigungssignal kann geeignet sein durch den Aktuator eine Bewegung des Sperrkörpers bis in die zweite Schaltposition zu bewirken. Ein vollständig freigegebener Durchflussquerschnitt kann ein maximal möglicher Kanaldurchmesser durch das Ventil sein. Dadurch kann der maximal mögliche Volumenstrom, also das Nennvolumen, eines Fluids durch das Ventil fließen und dabei Ablagerungen und/oder Verschmutzungen an Ventilwänden aus dem Ventil ausspülen.

Entsprechend einer weiteren Ausführungsform der vorliegenden Erfindung kann der Schritt des Ansteuerns ansprechend auf eine Steuerinformation ausgeführt werden, die von einer Steuerung empfangen wird, wenn sich ein zu schmierendes Bauteil in einer vorgegebenen Schmierposition befindet.

Eine Steuerung kann eine Schmierungssteuerung sein. Ebenso kann unter der Steuerung eine Anlagensteuerung verstanden werden, beispielsweise eine Motorsteuerung. Eine Steuerinformation kann ein Signal sein, das einen Zeitpunkt für eine gewünschte Aktivierung des Ventils kennzeichnet. Ein zu schmierendes Bauteil kann beispielsweise ein bewegliches Bauteil mit einer Kontaktstelle zu einem unbeweglichen Bauteil sein. Beide Bauteile können zueinander eine Relativbewegung ausführen. Ein zu schmierendes Bauteil kann z.B. ein Kolben eines Motors in einem Zylinder sein. Ebenso kann ein zu schmierendes Bauteil beispielsweise ein Sägegatter in einem Sägegestell/Rahmen sein. Eine vorgegebene Schmierposition kann eine vorbestimmte Position in Relation zu dem unbeweglichen Bauteil sein, an dem sich das zu schmierende Bauteil befinden kann, in der es geschmiert werden soll. Beispielsweise kann die vorgegebene Schmierposition bei einer oszillierenden Bewegung des zu schmierenden Teils nahe an einem oberen oder unteren Totpunkt der Bewegung sein. Dort kann durch eine längere Überdeckungsdauer der vorgegebenen Schmierposition durch das zu schmierende Bauteil ein längerer Schmierzeitraum erreicht werden. Desweitern kann damit erreicht werden, dass ein Schmierstoff zwischen das zu schmierende Bauteil und das feste/unbewegliche Bauteil gelangt.

Ferner kann auch der Schritt des Betätigens ansprechend auf eine Reinigungsinformation ausgeführt werden, die von der Steuerung empfangen wird, wenn eine vorgegebene Anzahl von Schritten des Ansteuerns durchgeführt worden sind und/oder wenn sich das zu schmierende Bauteil in einer vorgegebenen Reinigungsposition befindet.

Unter einer Reinigungsinformation kann ein Signal verstanden werden, das zu einem gewünschten Zeitpunkt für eine Reinigung des Ventils ausgegeben wird. Beispielsweise kann ein prophylaktischer Reinigungshub des Schmierkörpers auf eine vorgegebene Anzahl von Schmierhüben des Schmierkörpers folgen. Ebenso kann bei Erfassung der Differenz zwischen Soll- und Ist-Länge der Bewegung/des Hubs im Schritt des Ansteuerns die Reinigungsinformation bei einem Überschreiten einer festgelegten Abweichungsschwelle ausgegeben werden. Der Reinigungshub kann durchgeführt werden, wenn durch den Fluidstrom durch das Ventil ausgespülte Verunreinigungen nicht zwischen das zu schmierende Bauteil und das feste Bauteil gelangen können. Beispielsweise wenn sich das zu schmierende Bauteil entfernt von der Schmierposition befindet. Insbesondere kann die Reinigungsposition kurz vor einem der Schmierposition entgegengesetzten Totpunkt der Bewegung sein, wenn beispielsweise in einem Zylinder gerade eine Verbrennung abläuft. Dadurch kann ein Betrieb ohne Stillstand des zu schmierenden Teils erreicht werden, obwohl das Ventil regelmäßig gereinigt wird.

In einer weiteren Ausführungsform kann das Reinigungssignal ein pulsweitenmoduliertes Signal sein. Dadurch kann eine zuverlässige Technologie zur Erzeugung der Signale eingesetzt werden. Durch eine Pulsweitenmodulation können mehrere Schmier- oder Reinigungshübe unmittelbar hintereinander erfolgen. Das pulsweitenmodulierte Signal kann beispielsweise durch einen Leistungssteller einen Stromfluss für die Betätigung des Ventils steuern.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die Erfindung wird nachstehend anhand der beigefügten Zeichnungen beispielhaft näher erläutert. Es zeigen:
- Fig. 1: ein Ablaufdiagramm eines Verfahrens gemäß einem Ausführungsbeispiel der Erfindung; und
- Fig. 2: eine Darstellung eines Schmierventils mit einem Steuergerät gemäß einem Ausführungsbeispiel der Erfindung.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal/Schritt und einem zweiten Merkmal/Schritt, so kann dies so gelesen werden, dass das Ausführungsbeispiel gemäß einer Ausführungsform sowohl das erste Merkmal / den ersten Schritt als auch das zweite Merkmal /den zweiten Schritt und gemäß einer weiteren Ausführungsform entweder nur das erste Merkmal /Schritt oder nur das zweite Merkmal /Schritt aufweist.

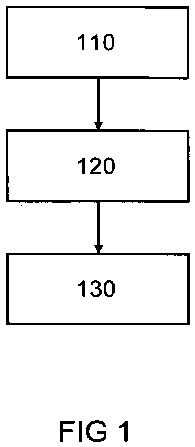

Fig. 1 zeigt ein Ablaufdiagramm eines Verfahrens zum Ansteuerung einer ballistischen Bewegung eines Sperrkörpers eines Ventils gemäß einem Ausführungsbeispiel der vorliegenden Erfindung. Das Verfahren weist einen Schritt 110 des Ansteuerns, einen Schritt 120 des Erfassens und einen Schritt 130 des Betätigens auf. Im Schritt 110 wird eine ballistische Bewegung des Sperrkörpers aus einer Ruhelage mit einem Aktivierungssignal angesteuert. Eine Signaldauer des Aktivierungssignals ist zeitlich derart kurz dimensioniert, dass der Sperrkörper vor Erreichen einer zweiten Schaltstellung von einer Gegenkraft zurück in eine erste Schaltstellung bewegt wird. Dabei gibt der Sperrkörper während der ballistischen Bewegung einen Durchflussquerschnitt des Ventils zumindest teilweise frei. Der Schritt 110 wird ausgeführt, wenn eine Steuerinformation von einer Steuerung empfangen wird. Die Steuerung gibt die Steuerinformation aus, wenn sich ein zu schmierendes Bauteil in einer vorgegebenen Schmierposition befindet. Im Schritt 120 wird eine Länge eines Bewegungswegs des Sperrkörpers erfasst. Aus der erfassten Länge des Bewegungswegs und einer Solllänge des Bewegungswegs wird eine Differenz ermittelt. Ansprechend auf eine positive oder negative Differenz wird in einem nachfolgenden Schritt des Ansteuerns die Signaldauer des Aktivierungssignals reduziert oder erhöht. Die Länge des Bewegungswegs wird erfasst, indem beispielsweise eine elektrische Reaktion in einem Ventilantrieb/Aktuator des Ventils, beispielsweise eine Gegen-Induktion in einer Spule zur Bewegung des Sperrkörpers beim Betätigen des Ventils ausgewertet wird. Im Schritt 130 wird das Ventil betätigt, wenn eine Reinigungsinformation von der Steuerung empfangen wird, oder eine maximal vorgegebene Differenz zwischen der gemessenen Länge und der Solllänge des Bewegungswegs überschritten wird. Dabei wird der Sperrkörper ansprechend auf ein Reinigungssignal aus seiner Ruhelage bewegt. Das Reinigungssignal ist zeitlich derart dimensioniert, dass der Sperrkörper die zweite Schaltstellung zumindest kurzzeitig erreicht und der Sperrkörper dabei den Durchflussquerschnitt vollständig freigibt. Durch die vollständige Öffnung des Durchflussquerschnitts können im Ventil abgelagerte Schmutzpartikel durch einen entstehenden Fluidstrom ausgespült werden. Die Steuerung gibt die Reinigungsinformation nach einer vorgegebenen Anzahl von Schritten des Ansteuerns aus, und/oder wenn sich das zu schmierende Bauteil in einer vorgegebenen Reinigungsposition befindet.

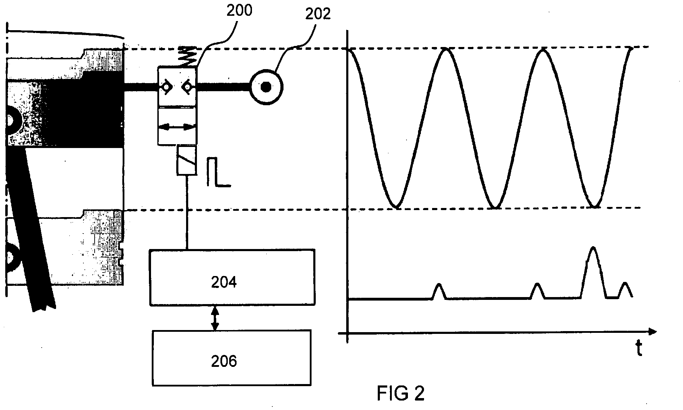

Fig. 2 zeigt als ein Ausführungsbeispiel der Erfindung eine Schmiervorrichtung. Die Schmiervorrichtung schmiert mit einem 2/2 Wegeventil 200 einen oszillierenden Kolben in einem Zylinder, beispielsweise eines Großdieselmotors. Das Ventil 200 gibt dazu kurz vor einem oberen Totpunkt des Kolbens eine Schmierleitung zumindest teilweise frei. Daraufhin kann Schmieröl durch die Schmierleitung von einer Schmierölversorgung 202 zwischen Zylinderwand und Kolben fließen. Um die Schmierleitung freizugeben, wirken auf den ein Sperrkörper im Ventil 200 ein oder mehrere Kraftimpulse, die zu einer oder mehreren ballistischen Bewegungen des Sperrkörpers führen, um einen Durchflussquerschnitt der Schmierleitung teilweise freizugeben. Das Ventil 200 wird im hier beschriebenen Ausführungsbeispiel von einer Magnetspule angetrieben. Ein pulsweitenmoduliertes Signal aus einem Steuergerät 204 steuert eine Erregung der Magnetspule so kurzzeitig, das der von der Magnetspule auf den Sperrkörper übertragene Kraftimpuls nicht ausreicht, den Sperrkörper aus einer geschlossenen Schaltstellung vollständig in eine geöffnete Schaltstellung zu bewegen. Dadurch bewegt sich der Sperrkörper innerhalb des Ventils 200 ballistisch (also wie bei einem Wurf nach oben bzw. in die Druckflussfreigabeposition des Sperrkörpers) gegen eine Federkraft und/oder einen Schmieröldruck in der Schmierölversorgung 202. Druck und/oder Federkraft wirken auf den Sperrkörper und bewegen ihn zurück in die geschlossene Schaltstellung. Das Steuergerät 204 wird von einer Motorsteuerung 206 überwacht. Die Motorsteuerung 206 überwacht eine Position des oszillierenden Kolbens und gibt eine Steuerinformation an das Steuergerät 204, wenn der Kolben eine vorgegebene Schmierposition erreicht hat. In dem mit Bezug zu Fig. 2 dargestellten Ausführungsbeispiel befindet sich die vorgegebene Schmierposition kurz vor dem oberen Totpunkt des Kolbens im Zylinder. Um eine Pulslänge des pulsweitenmodulierten Signals zu regeln, überwacht das Steuergerät 204 die Bewegung der Sperrkörpers im Ventil 200 beispielsweise über eine Auswertung einer Gegen-Induktion in der Magnetspule während der Bewegung. Ist die Bewegung zu klein, so verlängert das Steuergerät 204 die Pulslänge beim nächsten Puls bzw. Zyklus. Ist die Bewegung zu groß, und damit die Öffnungsweite für die gewünschte Menge an Fluid, die durch das Ventil strömen soll, zu groß, verkürzt das Steuergerät 204 die Pulslänge beim nächsten Puls oder Zyklus. Wenn die Motorsteuerung 206 eine vorbestimmte Anzahl von Kolbenhüben registriert hat, so gibt sie kurz vor einem unteren Totpunkt des Zylinders eine Reinigungsinformation an das Steuergerät 204. Daraufhin gibt das Steuergerät 204 einen verlängerten Puls als Reinigungssignal aus. Das Reinigungssignal steuert einen Kraftimpuls auf den Sperrkörper, der ausreicht den Sperrkörper bis in die geöffnete Schaltstellung zu bewegen. Dadurch kann kurzzeitig durch den vollen Durchflussquerschnitt viel Schmieröl aus der Schmierölversorgung 202 in den Zylinder strömen. Dabei reißt der Fluidstrom Verunreinigungen und Ablagerungen mit. Das Schmieröl aus dem Spülhub verbrennt beispielsweise bei der nächsten Zündung im Zylinder.

Rechts neben der Darstellung des Blockschaltbilds des Ausführungsbeispiels zeigt Fig. 2 ein Diagramm mit zwei Kurven. Auf der Abszisse ist die Zeit aufgetragen, die Ordinate repräsentiert Bewegungswege. Eine obere Kurve repräsentiert einen zeitlichen Verlauf eines Wegs des Kolbens im Zylinder. Da der Kolben im Zylinder zwischen dem oberen Totpunkt und dem unteren Totpunkt oszilliert, ist die Kurve des Wegs sinusförmig. Eine untere Kurve repräsentiert einen zeitlichen Verlauf eines Wegs des Sperrkörpers im Ventil. Jeweils zeitlich kurz vor dem Erreichen des oberen Totpunkts des Kolbens wird der Sperrkörper im Ventil ballistisch bewegt. Dies repräsentiert jeweils einen Schmierhub. Da der Sperrkörper ballistisch bewegt wird, weist die Kurve während eines Schmierhubs einen parabelförmigen Verlauf auf. Nach einer vorbestimmten Anzahl von Kolbenhüben weist die untere Kurve zeitlich kurz vor einem Erreichen des unteren Totpunkts des Zylinders einen weiteren parabelförmigen Verlauf auf. Dies repräsentiert einen Spülhub. Dabei erreicht der Sperrkörper am höchsten Punkt der Parabel zum Spülhub die vollständig geöffnete Schaltstellung. Der Weg, den der Sperrkörper während eines Spülhubs zurücklegt ist näherungsweise vier bis fünfmal so groß wie der Weg, den der Sperrkörper während eines Schmierhubs zurücklegt. Zwischen den Schmierüben und dem einen Spülhub weist die untere Kurve einen geradlinigen Verlauf auf, indem sich der Sperrkörper in seiner (geschlossenen) Ruhestellung befindet.

Zusammengefasst bezieht sich Fig. 2 auf eine hydraulische Steuerung zur Versorgung und zeit- und mengengenauen Dosierung von Schmierstoff an einer Schmierstelle in einem 2-Takt Großdieselmotor z.B. in einem Schiffsdiesel oder Notstrom-Generator. Die Schmiermenge wird über ein Schalt-2/2-Wege-Ventil dosiert, welches ballistisch angesteuert wird. Das heißt das Ventil wird über Strompulse kurzer Dauer angesteuert, die in der Regel nicht ausreichen, den Ventilkolben in seine Endlage bei voller Öffnung zu bringen. Der Öffnungshub erfolgt ballistisch, d.h. der Kolben wird durch die pulsartige Magnetbetätigung in Öffnungsrichtung gestoßen und fällt unter Einwirkung der Ventilfeder und Strömungskräften wieder in seine geschlossene Endlage zurück (ballistische Bewegung). Die Dauer des Pulses bestimmt dabei die pro ballistischen Öffnungshub dosierte Ölmenge. Mit diesem Betriebsmodus lassen sich mittlere Volumenströme einstellen, die um einen Faktor 1/10000 unter dem Nennvolumenstrom des Grundventils liegen.

Mit anderen Worten zeigt Fig. 2 beispielsweise ein digitales ballistisches Schmierventil für Großdiesel als Schnellschaltventil zur zeit- und mengengenauen Schmierung des Kolbens von 2-Takt-Großdieseln an einer Schmierölversorgung mit einem Druck von 20 bis 60 bar. Ein Ballistischer PWM-Booster 204 mit Ventilhubauswertung wird von einer Motorsteuerung angesteuert und bewirkt mehrere Schmierhübe von 3 bis 200 mm³ bzw. einen Spülhub von z.B. 2000 mm³ nach 10 Hüben und/oder nach Ventilhubauswertung. Durch den ballistischen Betrieb sind relativ einfache Schalt-Ventile verwendbar (gegebenenfalls Katalogware). Es entstehen geringe Probleme mit verschmutzter Hydraulikflüssigkeit, eine hohe Genauigkeit bei einfacher Funktionskontrolle ist möglich. Durch einen Einsatz einfacher Ventile sind diese robust gegen Temperatur, Schock und elektromagnetische Störungen. Ohne ballistischen Betrieb werden schnellere Ventile benötigt. Mehrere Ventile können mit einem gemeinsamen oder mit einzelnen Boostverstärkern betrieben werden. Eine Mengensteuerung für kleinste Mengen pro Hub erfolgt durch PWM-Impulse für ballistischen Betrieb. Hilfreich ist eine Druckerfassung zur Kompensation der Delta-P-Streuung (Druckstreuung). Durch eine Auswertung der Gegen-Induktion zur Schaltkontrolle und Ventilwegerfassung lässt sich eine Korrektur der Ventilöffnung ggf. im darauffolgenden Hub realisieren. Durch mögliche Vollöffnungen des Ventils nach einer festgelegten Zahl von Teilhüben kann das Ventil gespült werden. Die Schmutzanfälligkeit wird dadurch stark reduziert.

### Bezugszeichenliste

- 110: Ansteuern
- 120: Erfassen
- 130: Betätigen
- 200: Ventil
- 202: Schmierölversorgung
- 204: Steuergerät, Einrichtung zum Ansteuern
- 206: Steuerung, Motorsteuerung

## Patentansprüche

1. Verfahren zum Ansteuern einer ballistischen Bewegung eines Sperrkörpers eines Ventils (200), wobei der Sperrkörper zur Sperrung eines Durchflussquerschnitts des Ventils ausgebildet ist, wobei der Sperrkörper in eine eine Sperrlage bildende erste Schaltstellung und eine den Durchflussquerschnitt vollständig freigebende zweite Schaltstellung schaltbar ist, wobei der Sperrkörper in einer Ruhelage die erste Schaltstellung einnimmt, und wobei der Sperrkörper ansprechend auf ein Aktivierungssignal aus seiner Ruhelage bewegt wird, wobei das Verfahren den folgenden Schritt aufweist:
Ansteuern (110) der ballistischen Bewegung, wobei eine Signaldauer des Aktivierungssignals zeitlich derart dimensioniert ist, dass der Sperrkörper vor Erreichen der zweiten Schaltstellung von einer Gegenkraft zurück in die erste Schaltstellung bewegt wird und dass der Sperrkörper während der Bewegung den Durchflussquerschnitt zumindest teilweise freigibt, wobei eine ballistische Bewegung als Bewegung eines Körpers mit einem in einem Bewegungsweg-Zeit-Diagramm parabelförmigen Verlauf verstanden wird,
**dadurch gekennzeichnet, dass**
das Aktivierungssignal ein pulsweitenmoduliertes Signal zur Einstellung von mittleren Volumenströmen ist, die unter dem Nennvolumenstrom des Ventils liegen.

2. Verfahren gemäß Anspruch 1, mit einem Schritt des Erfassens (120) einer Differenz zwischen einer Länge eines Bewegungswegs des Sperrkörpers und einer Soll-Länge des Bewegungswegs, wobei in einem nachfolgenden Schritt des Ansteuerns die Signaldauer entsprechend der Differenz variiert wird.

3. Verfahren gemäß Anspruch 2, wobei die Länge des Bewegungswegs erfasst wird, indem eine elektrische Größe als Reaktion des Ventils (200) auf das Aktivierungssignal während des Schritts (110) des Ansteuerns ausgewertet wird.

4. Verfahren gemäß einem der vorhergehenden Ansprüche, mit einem Schritt des Betätigens (130) des Ventils (200), wobei der Sperrkörper ansprechend auf ein Reinigungssignal aus seiner Ruhelage bewegt wird, wobei eine Signaldauer des Reinigungssignals zeitlich derart dimensioniert ist, dass der Sperrkörper die zweite Schaltstellung erreicht und der Sperrkörper den Durchflussquerschnitt vollständig freigibt.

5. Verfahren gemäß Anspruch 4, wobei der Schritt (130) des Betätigens ansprechend auf eine Reinigungsinformation ausgeführt wird, die von einer Steuerung (206) empfangen wird, wenn eine vorgegebene Anzahl von Schritten (110) des Ansteuerns durchgeführt worden sind und/oder wenn sich das zu schmierende Bauteil in einer vorgegebenen Reinigungsposition befindet.

6. Verfahren gemäß einem der vorhergehenden Ansprüche, wobei der Schritt (110) des Ansteuerns ansprechend auf eine Steuerinformation ausgeführt wird, die von der Steuerung (206) empfangen wird, wenn sich ein zu schmierendes Bauteil in einer vorgegebenen Schmierposition befindet.

7. Verfahren gemäß einem der vorhergehenden Ansprüche 4 oder 5, wobei das Reinigungssignal ein pulsweitenmoduliertes Signal ist.

8. Steuergerät (204) zum Ansteuern einer ballistischen Bewegung eines Sperrkörpers eines Ventils (200), wobei der Sperrkörper zur Sperrung eines Durchflussquerschnitts des Ventils ausgebildet ist, wobei der Sperrkörper in eine eine Sperrlage bildende erste Schaltstellung und eine den Durchflussquerschnitt vollständig freigebende zweite Schaltstellung schaltbar ist, wobei der Sperrkörper in einer Ruhelage die erste Schaltstellung einnimmt, und wobei der Sperrkörper ansprechend auf ein Aktivierungssignal aus seiner Ruhelage bewegt wird, mit folgenden Merkmalen:
eine Einrichtung (204), die zum Ansteuern der ballistischen Bewegung eingerichtet ist, wobei eine Signaldauer des Aktivierungssignals zeitlich derart dimensioniert ist, dass der Sperrkörper vor Erreichen der zweiten Schaltstellung von einer Gegenkraft zurück in die erste Schaltstellung bewegt wird und dass der Sperrkörper während der Bewegung den Durchflussquerschnitt zumindest teilweise freigibt, wobei eine ballistische Bewegung als Bewegung eines Körpers mit einem in einem Bewegungsweg-Zeit-Diagramm parabelförmigen Verlauf verstanden wird,
**dadurch gekennzeichnet, dass**
die Einrichtung (204) ausgebildet ist, um das Aktivierungssignal als ein pulsweitenmoduliertes Signal zur Einstellung von mittleren Volumenströmen auszugeben, die unter dem Nennvolumenstrom des Ventils liegen.

9. Computerprogrammprodukt mit Programmcode, der auf einem maschinenlesbaren Träger gespeichert ist, zur Durchführung des Verfahrens nach einem der Ansprüche 1 bis 7, wenn das Programm auf einem Steuergerät (204) ausgeführt wird.

10. Schmiervorrichtung mit folgenden Merkmalen:
einem Schmierventil (200) mit einem Sperrkörper zur Sperrung eines Durchflussquerschnitts des Schmierventils, wobei der Sperrkörper in eine erste Schaltstellung und eine zweite Schaltstellung schaltbar ist, wobei der Sperrkörper in einer Ruhelage die erste Schaltstellung einnimmt, und wobei der Sperrkörper ansprechend auf ein Aktivierungssignal aus seiner Ruhelage bewegt wird; und
einem Steuergerät (204) gemäß Anspruch 8.

## Claims

1. Method for controlling a ballistic movement of a blocking body of a valve (200), wherein the blocking body is formed for blocking a throughflow cross section of the valve, wherein the blocking body is able to be switched into a first switching position which forms a blocking position and into a second switching position which completely opens up the throughflow cross section, wherein the blocking body assumes the first switching position in a rest position, and wherein the blocking body is moved from its rest position in response to an activation signal, wherein the method comprises the following step:
controlling (110) the ballistic movement, wherein a signal duration of the activation signal is temporally dimensioned such that the blocking body is moved back into the first switching position by a counterforce prior to reaching the second switching position and that the blocking body at least partially opens up the throughflow cross section during the movement, wherein a ballistic movement is understood to mean a movement of a body with a profile which is parabolic in a movement displacement-time diagram,
**characterized in that**
the activation signal is a pulse-width modulated signal for setting medium volumetric flow rates which are below the nominal volumetric flow rate of the valve.

2. Method according to Claim 1, comprising a step of measuring (120) a difference between a length of a movement displacement of the blocking body and a target length of the movement displacement, wherein, in a subsequent step of controlling, the signal duration is varied according to the difference.

3. Method according to Claim 2, wherein the length of the movement displacement is measured by evaluation of an electrical variable as a response of the valve (200) to the activation signal during the step (110) of controlling.

4. Method according to one of the preceding claims, comprising a step of actuating (130) the valve (200), wherein the blocking body is moved from its rest position in response to a cleaning signal, wherein a signal duration of the cleaning signal is temporally dimensioned such that the blocking body reaches the second switching position and the blocking body completely opens up the throughflow cross section.

5. Method according to Claim 4, wherein the step (130) of actuating is executed in response to a piece of cleaning information which is received by a controller (206) when a predefined number of steps (110) of controlling have been carried out and/or when the component to be lubricated is situated in a predefined cleaning position.

6. Method according to one of the preceding claims, wherein the step (110) of controlling is executed in response to a piece of control information which is received by the controller (206) when a component to be lubricated is situated in a predefined lubrication position.

7. Method according to either of the preceding Claims 4 and 5, wherein the cleaning signal is a pulse-width modulated signal.

8. Control unit (204) for controlling a ballistic movement of a blocking body of a valve (200), wherein the blocking body is formed for blocking a throughflow cross section of the valve, wherein the blocking body is able to be switched into a first switching position which forms a blocking position and into a second switching position which completely opens up the throughflow cross section, wherein the blocking body assumes the first switching position in a rest position, and wherein the blocking body is moved from its rest position in response to an activation signal, having the following features:
a device (204) which is set up for controlling the ballistic movement, wherein a signal duration of the activation signal is temporally dimensioned such that the blocking body is moved back into the first switching position by a counterforce prior to reaching the second switching position and that the blocking body at least partially opens up the throughflow cross section during the movement, wherein a ballistic movement is understood to mean a movement of a body with a profile which is parabolic in a movement displacement-time diagram,
**characterized in that**
the device (204) is configured to output the activation signal as a pulse-width modulated signal for setting medium volumetric flow rates which are below the nominal volumetric flow rate of the valve.

9. Computer program product with program code, which is stored on a machine-readable carrier, for carrying out the method according to one of Claims 1 to 7 when the program is executed on a control unit (204).

10. Lubrication device having the following features:
a lubrication valve (200) with a blocking body for blocking a throughflow cross section of the lubrication valve, wherein the blocking body is able to be switched into a first switching position and into a second switching position, wherein the blocking body assumes the first switching position in a rest position, and wherein the blocking body is moved from its rest position in response to an activation signal; and
a control unit (204) according to Claim 8.

## Revendications

1. Procédé de commande du mouvement balistique d'un corps obturateur d'une soupape (200),
dans lequel le corps obturateur est conçu pour obturer une section d'écoulement de la soupape, dans lequel le corps obturateur peut être amené à basculer à une première position de basculement formant une position d'obturation et une seconde position de basculement libérant entièrement la section transversale d'écoulement, dans lequel le corps obturateur passe à la première position de basculement en position de repos, et dans lequel le corps obturateur est déplacé hors de sa position de repos en réponse à un signal d'activation, dans lequel le procédé comprend l'étape consistant à :
commander (110) le mouvement balistique, dans lequel une durée de signal du signal d'activation est dimensionnée dans le temps de manière à ce que le corps obturateur soit ramené à la première position de basculement par une force opposée avant d'atteindre la seconde position de basculement et à ce que le corps obturateur libère au moins partiellement la section transversale d'écoulement pendant le déplacement, dans lequel un mouvement balistique est compris comme étant le mouvement d'un corps ayant une trajectoire parabolique dans un diagramme trajet de déplacement-temps,
**caractérisé en ce que** le signal d'activation est un signal modulé en largeur d'impulsion destiné à régler des débits volumiques moyens qui sont inférieurs au débit volumique nominal de la soupape.

2. Procédé selon la revendication 1, comprenant une étape consistant à détecter (120) une différence entre une longueur d'un trajet de déplacement du corps obturateur et une longueur nominale du trajet de déplacement, dans lequel, lors d'une étape ultérieure de commande de la durée de signal, la durée de signal est modifiée en fonction de la différence.

3. Procédé selon la revendication 2, dans lequel la longueur du trajet de déplacement est détectée en évaluant une grandeur électrique en tant que réaction de la soupape (200) au signal d'activation pendant l'étape (110) de commande.

4. Procédé selon l'une des revendications précédentes, comprenant une étape consistant à actionner (130) la soupape (200), dans lequel le corps obturateur est déplacé depuis sa position de repos en réponse à un signal de nettoyage, dans lequel une durée de signal du signal de nettoyage est dimensionnée dans le temps de manière à ce que le corps obturateur atteigne la seconde position de basculement et à ce que le corps obturateur libère entièrement la section transversale d'écoulement.

5. Procédé selon la revendication 4, dans lequel l'étape (130) d'actionnement est exécutée en réponse à une information de nettoyage reçue d'une unité de commande (206) lorsqu'un nombre prédéterminé d'étapes (110) d'actionnement ont été exécutées et/ou lorsque le composant à lubrifier est à une position de nettoyage prédéterminée.

6. Procédé selon l'une des revendications précédentes, dans lequel l'étape d'entraînement (110) est exécutée en réponse à des informations de commande reçues de l'unité de commande (206) lorsqu'un composant à lubrifier se trouve à une position de lubrification prédéterminée.

7. Procédé selon l'une des revendications 4 ou 5 précédentes, dans lequel le signal de nettoyage est un signal modulé en largeur d'impulsion.

8. Appareil de commande (204) destiné à commander le mouvement balistique d'un corps obturateur d'une soupape (200), dans lequel corps obturateur est conçu pour obturer une section transversale d'écoulement de la soupape, dans lequel corps obturateur peut être amené à basculer à une première position de basculement formant une position d'obturation et à une seconde position de basculement libérant entièrement la section transversale d'écoulement, dans lequel le corps obturateur passe à la première position de basculement en position de repos, et dans lequel le corps obturateur est déplacé hors de sa position de repos en réponse à un signal d'activation, présentant les éléments caractéristiques suivants :
un dispositif (204) conçu pour commander le mouvement balistique, dans lequel une durée de signal du signal d'activation est dimensionnée dans le temps de manière à ce que le corps obturateur soit ramené à la première position de basculement par une force opposée avant d'atteindre la seconde position de basculement et à ce que le corps obturateur libère au moins partiellement la section transversale d'écoulement pendant le déplacement, dans lequel un mouvement balistique est compris comme étant le mouvement d'un corps ayant une trajectoire parabolique dans un diagramme trajet de déplacement-temps,
**caractérisé en ce que** le dispositif (204) est conçu pour délivrer le signal d'activation sous la forme d'un signal modulé en largeur d'impulsion afin de régler des débits volumiques moyens qui sont inférieurs au débit volumique nominal de la soupape.

9. Produit de programme d'ordinateur comportant un code de programme stocké sur un support lisible par machine pour mettre en oeuvre le procédé selon l'une des revendications 1 à 7 lorsque le programme est exécuté sur une unité de commande (204).

10. Dispositif de lubrification présentant les éléments caractéristiques suivants :
une soupape de lubrification (200) ayant un corps obturateur destiné à obturer une section transversale d'écoulement de la soupape de lubrification,
dans lequel le corps obturateur peut être amené à basculer à une première position de basculement et à une seconde position de basculement,
dans lequel le corps obturateur, à une position de repos, passe à la première position de basculement et dans lequel le corps obturateur est déplacé hors de sa position de repos en réponse à un signal d'activation ; et
un appareil de commande (204) selon la revendication 8.
